# EUROPEAN PATENT APPLICATION

(11) **EP 4 116 234 A1**
(43) Date of publication of application: **11.01.2023**
(21) Application number: 22180797.7
(22) Date of filing: 23.06.2022
(51) Int. Cl.: B65G 1/06, B65G 1/04

(54) **MODULAR AUTONOMOUS VEHICLE**

(30) Priority: 06.07.2021 US 202117368149
(71) Applicant: Intelligrated Headquarters LLC, Mason, OH 45040 (US)
(72) Inventor: TURCO, Anthony, Charlotte, 28202 (US); DE ALMEIDA, Felipe, Charlotte, 28202 (US); BROUK, Justin, Charlotte, 28202 (US); ROTH, Eric, Charlotte, 28202 (US); SEBASTIAN, Jarl Nicholas, Charlotte, 28202 (US); OBERPRILLER, Mark Lee, Charlotte, 28202 (US)
(74) Representative: Haseltine Lake Kempner LLP

(57) **Abstract**

A transport device for storing and retrieving loads into and out of storage racks. The transport device including a load handling module and a power module. The load handling module includes a load carrying portion, a load handling device with a pair of extendable arms to extend and retract relative to the load carrying portion towards and away from the storage racks. A pair of support wheels to support a weight of the loads while the extendable arms extract the loads from the storage rack into the load carrying portion. A pair of side guides to position the retrieved load on the load carrying portion. The load handling device is attached to a mounting platform with an attachment bracket having an elongated groove. Further, the power module includes a collector shoe assembly pivotable between a conducting position and a non-conducting position using a movable arm and a locking mechanism.

## Description

### TECHNOLOGICAL FIELD

Example embodiments of the present disclosure relate generally to a storage and retrieval system and, more particularly, to an autonomous vehicle used in the storage and retrieval system.

### BACKGROUND

Picking loads in warehouse or distribution centers for order fulfillment can be been challenging. Different transportation systems pick loads from a source and transport them to a destination. The transportation systems may be, for example, conveying devices or transport devices. Generally, warehouses or distribution centers for storing loads may include a storage system that comprise a series of storage racks that are accessible by the transport devices such as, but not limited to, autonomous vehicles such as shuttles or stacker cranes or other transport devices such as vertical lifts that are movable within aisles along the storage racks. These transport devices may be used for storing and retrieving of loads in or from a storage rack of the storage system. Generally, the transport devices are comprised of multiple components which may be positioned on a frame and outside the frame of the transport devices which works in synergy to control movement of the transport devices and the movement of the loads handled by the transport devices.

### SUMMARY

The following presents a simplified summary to provide a basic understanding of some aspects of the disclosed material handling system. This summary is not an extensive overview and is intended to neither identify key or critical elements nor delineate the scope of such elements. Its purpose is to present some concepts of the described features in a simplified form as a prelude to the more detailed description that is presented later.

Various example embodiments described herein relate to a load handling module coupled to a transport device for storing and retrieving loads into and out of storage racks. The load handling module includes a load carrying portion; a load handling device comprising a pair of extendable arms configured to extend and retract relative to the load carrying portion towards and away from the storage racks. The load handling device further includes a first pair of guides comprising a first upper guide and a fist lower guide fastened to a first side frame; and a second pair of guides comprising a second upper guide and a second lower guide fastened to a second side frame. The first pair of guides and the second pair of guides are positioned in parallel and opposing each other; wherein the loads on the load carrying portion are positioned in between the first pair of guides and the second pair of guides by the pair of extendable arms.

Various example embodiments described herein relate to a load handling module, wherein a first distance between the first upper guide and the first lower guide is substantially same as a second distance between the second upper guide and a second lower guide.

Various example embodiments described herein relate to a load handling module, wherein the first pair of guides and the second pair of guides protrudes out from the first side frame and second side frame offset from the pair of extendable arms.

Various example embodiments described herein relate to a load handling module, wherein the pair of extendable arms comprises one or more cantilevered extendable portions.

Various example embodiments described herein relate to a load handling module, wherein each of the extendable arm comprises one or more sensors to control the extension and retraction of the pair of extendable arms.

Various example embodiments described herein relate to a load handling module, wherein each of the extendable arm comprises at least a pair of pivotable fingers to clamp with the load while extracting a load into the load carrying portion.

Various example embodiments described herein relate to a load handling module, wherein the load carrying portion comprises array of sensors spaced apart from each at a predefined distance to verify if the load in positioned in between the first pair of guides and the second pair of guides.

Various example embodiments described herein relate to a load handling module, wherein each of the extendable arms comprises at least one motor to individually control extension and retraction of each extendable arm.

Various example embodiments described herein relate to a load handling module, wherein one of the pair of extendable arms is linearly slidable in a direction transverse to the direction of extension of the first extendable arm.

Various example embodiments described herein relate to a load handling module, wherein the load handling device is mounted to a chassis comprising a pair of spreaders and pair of side tubes.

Various example embodiments described herein relate to a load handling module, wherein each of the side tube comprises elongated cut-out portion defining a linear guide track.

Various example embodiments described herein relate to a load handling module coupled to a transport device for storing and retrieving loads into and out of storage racks. The load handling module includes a first mounting platform and a load handling device coupled to the first mounting platform. The loading handing device includes a pair of extendable arms configured to extend and retract relative to the load carrying portion towards and away from the storage racks. A pair of support wheels fastened to the first mounting platform to support a weight of the loads while the extendable arms extract the loads from the storage rack into the load handling platform. Each of the support wheel is positioned on the opposing ends of the first mounting platform and guided with a predefined clearance on a linear guide track in a second direction orthogonal to the first direction.

Various example embodiments described herein relate to a load handling module, wherein the support wheels are capable of a negligible vertical movement within the predefined clearance to compensate for the weight of the loads.

Various example embodiments described herein relate to a load handling module including a lead screw assembly to guide the support wheels on the linear guide track.

Various example embodiments described herein relate to a load handling module coupled to a transport device for storing and retrieving loads into and out of storage racks. The load handling module includes a first mounting platform, a load handling device, and an attachment bracket attached to a side frame of the load handling device. The attachment bracket further comprises an elongated groove integrally formed on the attachment bracket to initially couple the load handling device with the first mounting platform by a friction fit to locate and pre-align fastening holes on the attachment bracket and the first mounting platform.

Various example embodiments described herein relate to a load handling module, wherein a first fastening hole on the first mounting platform substantially overlaps a second fastening hole on the attachment bracket by the friction fit.

Various example embodiments described herein relate to a load handling module including a first attachment bracket with first set of ridges and notches and a second attachment bracket with second set of ridges and notches. The first set of ridges and notches mate with the second set of ridges and notches to locate and pre-align fastening holes of the first attachment bracket and the second attachment bracket.

Various example embodiments described herein relate to a power module. The power module includes a current collector attached to a guide rail and a collector shoe assembly mounted on a mounting bracket attached to a chassis of a transport vehicle. A movable arm attached to the collector shoe assembly to pivot the collector shoe assembly between a conducting position and a non-conducting position. In the conducting position the collector shoe assembly is in contact with the current collector to supply current for one or more components of the transport vehicle. A locking mechanism coupled to the movable arm to lock the collector shoe assembly in conducting position and the non-conducting position.

Various example embodiments described herein relate to a power module, wherein the locking mechanism comprises a lever arm facilitating the locking mechanism to lock the collector shoe assembly in conducting position and the non-conducting position.

Various example embodiments described herein relate to a power module, wherein when the lever arm is pressed down to lock the pivoting movement of the movable arm and pulled up to unlock the pivoting movement of the movable arm.

The above summary is provided merely for purposes of summarizing some example embodiments to provide a basic understanding of some aspects of the disclosure. Accordingly, it will be appreciated that the above-described embodiments are merely examples and should not be construed to narrow the scope or spirit of the disclosure in any way. It will be appreciated that the scope of the disclosure encompasses many potential embodiments in addition to those here summarized, some of which will be further described below.

### BRIEF DESCRIPTION OF THE DRAWINGS

The description of the illustrative embodiments can be read in conjunction with the accompanying figures. It will be appreciated that for simplicity and clarity of illustration, elements illustrated in the figures have not necessarily been drawn to scale. For example, the dimensions of some of the elements are exaggerated relative to other elements. Embodiments incorporating teachings of the present disclosure are shown and described with respect to the figures presented herein, in which:
FIG. 1 illustrates a perspective view of a storage and retrieval system installed with transport devices, in accordance with an embodiment of the present disclosure.
FIG. 2 illustrates a perspective view of a transport device operating within the storage and retrieval system of FIG. 1, in accordance with an embodiment of the present disclosure.
FIG. 3 illustrates perspective view of chassis of the transport device of FIG.2, in accordance with an embodiment of the present disclosure.
FIG. 4 illustrates a perspective view of the chassis of FIG. 3 with a close-up view of support rollers and linear guide track, in accordance with an embodiment of the present disclosure.
FIG. 5A illustrates a front view of the chassis with the support rollers of FIG. 4, in accordance with an embodiment of the present disclosure.
FIG. 5B illustrates a top view of the chassis with the load handling device and the support rollers of FIG. 4, in accordance with an embodiment of the present disclosure.
FIG. 6A illustrates a perspective view of the load handling module of FIG. 2 with extendable arms in an extended position, in accordance with an embodiment of the present disclosure.
FIG. 6B illustrates a perspective view of the load handling module of FIG. 2 with the extendable arms in a retracted position, in accordance with an embodiment of the present disclosure.
FIG. 7 illustrates a sectional view of the shuttle vehicle with a close-up view of an attachment mechanism for mounting the load handling module of FIGS. 6A and 6B to a mounting platform, in accordance with an embodiment of the present disclosure.
FIG. 8A illustrates a sectional view of an attachment mechanism for mounting the load handling module of FIGS. 6A and 6B to the mounting platform, in accordance with another embodiment of the present disclosure.
FIG. 8B illustrates a front view of the attachment mechanism of FIG. 8A, in accordance with another embodiment of the present disclosure.
FIG. 9 illustrates a sectional view of the shuttle vehicle of FIG. 2 with the drive module, in accordance with an embodiment of the present disclosure.
FIG. 10 illustrates a sectional view of the shuttle vehicle of FIG. 2 with a close-up view of the integrated unit of the shuttle vehicle, in accordance with an embodiment of the present disclosure.
FIG. 11A illustrates a close-up sectional view of the collector shoe assembly of FIG. 10, in accordance with an embodiment of the present disclosure.
FIG. 11B illustrates a close-up sectional view of a current collector installed on a guide rail, in accordance with an embodiment of the present disclosure.
FIG. 11C illustrates a sectional front view of a contact between the current collector of FIG. 11B and a collector shoe of FIG. 11A, in accordance with an embodiment of the present disclosure.
FIG. 12A illustrates a top-up view of the collector shoe assembly in a non-conducting position, in accordance with an embodiment of the disclosure.
FIG. 12B illustrates a top-up view of the collector shoe assembly in a conducting position, in accordance with an embodiment of the present disclosure.
FIGS. 13-14 illustrates a sectional view of the shuttle vehicle of FIG. 2 with sensors provided on the load handling module, in accordance with an embodiment of the present disclosure.
FIGS. 15A-15B illustrates a top view of the shuttle vehicle of FIG. 2 storing and retrieving loads using another set of sensors, in accordance with an embodiment of the present disclosure.
FIG. 16 illustrates a perspective view of the shuttle vehicle of FIG. 2 with sensors provided on the load carrying portion, in accordance with an embodiment of the present disclosure.
FIG. 17 illustrates a top view of the shuttle vehicle of FIG. 2 with array of sensors provided on the load carrying portion or the load handling module, in accordance with an embodiment of the present disclosure.

### DETAILED DESCRIPTION

Some embodiments of the present invention will now be described more fully hereinafter with reference to the accompanying drawings, in which some, but not all embodiments of the inventions are shown. Indeed, the disclosure may be embodied in many different forms and should not be construed as limited to the embodiments set forth herein; rather, these embodiments are provided so that this disclosure will satisfy applicable legal requirements. The terms "or" and "optionally" are used herein in both the alternative and conjunctive sense, unless otherwise indicated. The terms "illustrative" and "exemplary" are used to be examples with no indication of quality level. Like numbers refer to like elements throughout.

The components illustrated in the figures represent components that may or may not be present in various embodiments of the invention described herein such that embodiments may include fewer or more components than those shown in the figures while not departing from the scope of the invention.

Turning now to the drawings, the detailed description set forth below in connection with the appended drawings is intended as a description of various configurations and is not intended to represent the only configurations in which the concepts described herein may be practiced. The detailed description includes specific details for the purpose of providing a thorough understanding of various concepts with like numerals denote like components throughout the several views. However, it will be apparent to those skilled in the art that these concepts may be practiced without these specific details.

As used herein, the terms "pick-up" or "store" or "deposit" or "retrieve" may collectively refer to various operations performed by the vertical lifts and the autonomous vehicle in the rack storage system. Thus, use of any such terms should not be taken to limit the spirit and scope of embodiments of the present disclosure.

As used herein, the term "load handling station" may be used to refer to a pick-up and deposit (P&D) conveyor or infeed/outfeed conveyor or buffer conveyor which can support and convey loads using one or more conveying elements. Thus, use of any such terms should not be taken to limit the spirit and scope of embodiments of the present disclosure.

As used herein, the terms "guide rail" or "support rail" may be used to refer to guideways or pathways through which the vertical lifts and the autonomous vehicle are guided to store and retrieve the loads. Thus, use of any such terms should not be taken to limit the spirit and scope of embodiments of the present disclosure.

As used herein, the terms "storage system", "retrieval system", "rack storage system", "automated storage and retrieval system" may be used to refer to any portion of a warehouse or a distribution center having multiple storage racks with a provision to store and retrieve one or more loads. Thus, use of any such terms should not be taken to limit the spirit and scope of embodiments of the present disclosure.

As used herein, the terms "plates", "braces", "brackets", "mounts", "platforms" may be used to refer to structural elements with provisions to mechanically couple with other structural elements of a mechanical system or an electrical system.

As used herein, the terms "loads" or "load" may be used to refer to items, products, articles, packages, baggage, luggage, storage containers such as trays, totes, cartons, boxes, or pallets. Thus, use of any such terms should not be taken to limit the spirit and scope of embodiments of the present disclosure.

As used herein, the term 'transport device' may be any type of autonomous guided vehicle (AGV) or autonomous mobile robot (AMR) or shuttle vehicle or vertical lifts. Thus, use of any such terms should not be taken to limit the spirit and scope of embodiments of the present disclosure.

As used herein, the term 'suitable fasteners' may represent any type of fasteners generally known in the art to that can couple mechanical structures together. Some of the common type of fasteners are nuts, bolts, clamps, screws, washers, rivets, clevis pin, gussets and the like. Further, the term 'suitable fasteners' may also represent any fastening techniques known in the art, such as, but not limited to, force fit, clearance fit, interference fit, transition fit or any other types of engineering fit. Thus, use of any such terms should not be taken to limit the spirit and scope of embodiments of the present disclosure.

Generally, a storage and retrieval system may be provided as a two-dimensional or three-dimensional storage and retrieval system. Such storage and retrieval system are often referred to as Automated Storage and Retrieval System (ASRS or AS/RS). In such automated storage and retrieval system, throughput is always a concern due to increase in storage and retrieval times. Further, retrieving loads from the storage racks in a quick and efficient manner has been a constraint in most of the automated storage and retrieval system. Typically, the transport devices may be movable in vertical directions and horizontal directions within the aisles which is defined between two adjacent storage racks for storing and retrieving the loads. Each storage rack may be of a predefined height configured with multiple storage levels with predefined depth to store the loads picked up by the transport devices. One such transport device which can move both horizontally and vertically at different heights between the multiple storage levels is a shuttle vehicle.

In some examples, the loads transported to/from the storage levels are contained in storage containers such as trays, totes, cartons, boxes or on pallets. Depending on a storage capacity of the storage racks, the racks may be known as high density racks or ultra-high-density racks. Such storage containers are stored in the storage racks and retrieved from the storage racks using the shuttle vehicle for performing operations such as, for example, order fulfilment or replenishment or building mixed pallets. While shuttle vehicles of various configurations have been proposed to store and retrieve the loads or storage containers for fulfilling such operations in a warehouse or a distribution center, the prior known configurations of the shuttle vehicles have certain drawbacks. Some of the considerations while designing the configurations of the shuttle vehicles to overcome the prior drawbacks are: minimize the storage and retrieval time; maximize safety in handling loads during storage and retrieval by minimizing slippage, misalignment and jam, minimize wear and tear of components of the shuttle vehicles by modifying the configuration/arrangement to handle overload, stress, vibrations, derailing and other external factors affecting the lifespan and safety of the shuttle vehicles and its components.

Through applied effort, ingenuity, and innovation, many of the above identified problems have been solved by developing solutions that are included in embodiments of the present disclosure, many examples of which are described in detail herein.

The present disclosure relates to a transport device for storing and retrieving loads into and out of storage racks. The transport device includes multiple components and modules such as a load handling module and a power module. The load handling module includes a load carrying portion, a load handling device with a pair of extendable arms, and a pair of side guides. The pair od side guides positions and aligns the loads on the load carrying portion to prevent toppling of the loads. A pair of support wheels to support a weight of the loads while the pair of extendable arms extract the loads from the storage rack into the load carrying portion so as to prevent mechanical stress on the arms. The load handling device is attached to a mounting platform with an attachment bracket having an elongated groove such that the load handling device and the mounting platform may be pre-aligned for quick installation. Further, the power module includes a collector shoe assembly pivotable between a conducting position and a non-conducting position using a movable arm and a locking mechanism to facilitate ease of maintenance.

The aforementioned advantages are provided as general examples of possible advantages achieved by incorporating the technical features described in the conjunction with various embodiments of the present disclosure. Various additional advantages, objects and features of the present disclosure can be more fully appreciated with reference to the detailed description and accompanying drawings. In the following detailed description of exemplary embodiments of the disclosure, specific representative embodiments in which the disclosure may be practiced are described in sufficient detail to enable those skilled in the art to practice the disclosed embodiments. For example, specific details such as specific method orders, structures, elements, and connections have been presented herein. However, it is to be understood that the specific details presented need not be utilized to practice embodiments of the present disclosure. It is also to be understood that other embodiments may be utilized and that logical, architectural, programmatic, mechanical, electrical and other changes may be made without departing from the general scope of the disclosure. The following detailed description is, therefore, not to be taken in a limiting sense, and the scope of the present disclosure is defined by the appended claims and equivalents thereof.

Throughout this specification, the terms 'conveyors' or 'conveyor devices' or 'conveyor system' may be used interchangeably and these terms should be taken as an example of both roller conveyor, a belt conveyor, or their combination.

Throughout this specification, the terms 'hinged' or hingedly' or 'transitioned' or 'pivoted' or 'pivotable' may be used interchangeably and should be taken as an example of a provision provided to a component to move from one position to another position.

Throughout this specification, the terms 'storage and retrieval system' or 'rack storage system' may be used interchangeably and should be taken as an example of a system having storage racks.

Throughout this specification, the terms 'shuttle' and 'shuttle vehicle' may be used interchangeable throughout the description and should be taken as an example of a transport device.

Generally, storage and retrieval system operate under computerized control, maintaining an inventory of stored loads. Retrieval of loads is accomplished by specifying the load type and quantity to be retrieved. The computer determines where in the storage area the load can be retrieved from and schedules the retrieval. The transport devices, for example, the shuttle vehicles or vertical lifts are sometimes part of the storage and retrieval system. In some storage and retrieval system, the horizontal movement in the storage racks within the system is made by independent shuttle vehicles each operating on one level of the storage rack while a vertical lift at a fixed position within the storage rack is responsible for the vertical movement. In some storage and retrieval system, the shuttle vehicles pick up or drop off loads at specific load handling stations in the storage area provided along with the storage rack. Inbound and outbound loads are precisely positioned for proper handling in the load handling stations. Various aspects of the present disclosure are described in connection with the transport devices used in the storage and retrieval system.

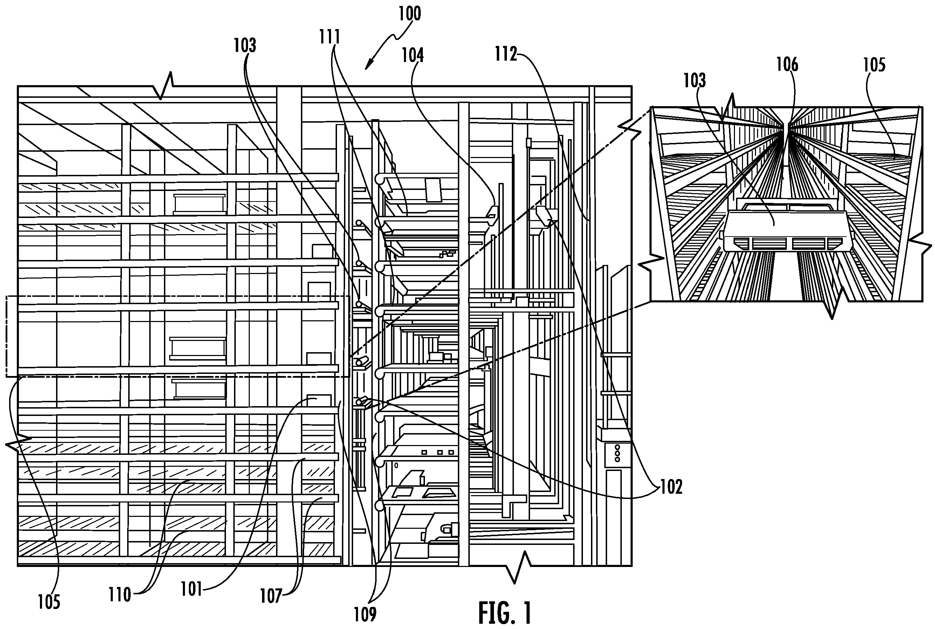

Referring now specifically to the drawings and the illustrative embodiments depicted therein, FIGS. 1 discloses a perspective view of a storage and retrieval system 100 installed with transport devices 102, in accordance with an embodiment of the present disclosure. The storage and retrieval system 100 include one or more transport devices 102. The one or more transport devices 102 may include shuttle vehicles 103 or vertical lifts 104. The storage and retrieval system 100 include one or more storage racks 105 with provisions to store one or more loads 101. The one or more storage racks 105 may be arranged in a stacked arrangement forming multiple storage levels 107. Multiple stacked arrangements of the storage racks 105 may be positioned adjacent to each other with a space defined in between each stacked arrangement, the space represents an aisle 106 through which the one or more transport devices 102 may commute to cater each storage level 107. For example, the shuttle vehicle 103 may travel to the storage racks 105 positioned at the multiple storage levels 107 through the aisle defined between each stacked arrangement of the storage rack 105. One such example of an aisle 106 through which the shuttle vehicle 103 travels to cater the storage levels 107 is shown in the exploded sectional view of FIG.1. The aisle 106 may include guide rails positioned adjacent the storage racks 105 to guide the shuttle vehicle 103. According to an embodiment, the stacked arrangements of the storage racks 105 may be positioned in the form of a grid structure to form voids in each stacked arrangement such that the one or more transport devices 102 may commute vertically through the voids to cater each storage level 107. One such stacked arrangement is shown in FIG. 1 in which the storage racks 105 are positioned one top of the other and mounted to multiples vertically extending beam structures 109. According to an embodiment, each storage rack 105 positioned at each storage level 107 may include multiple storage portions 110 provided sequentially at equal spacing throughout a length of the storage rack 105. The storage portions 110 are provided for storing the loads 101. In some examples, dimensions of each storage portion 110 may be same or substantially same or dissimilar. The one or more transport devices 102 may commute to each storage portion 110 to store or retrieve the loads 101. According an embodiment, the storage portion 110 to store the loads 101transported by the transport devices 102 is selected based on a current occupancy rate of the storage portions 110 and/or the dimensions of the storage portions 110. One such storge rack 105 with multiple storage portions 110 is shown in FIG. 1 to store the loads 101.

According to an embodiment, each storage rack 105 at each storage level 107 may include an entry portion through which the loads 101 enter the storage rack 105 and an exit portion through which the loads exit the storage rack 105. In some example, the entry portion and the exit portion may be positioned adjacent the storage rack 105 at same location or at different locations. According to embodiment, the entry portion and the exit portion may include a load handling station 111. Such load handling station 111 may be provided at each storage level 107 as shown in FIG. 1. In some examples, the load handling station 111 may be a conveyor. In some examples, the load handling station 111 may function as a buffer conveyor to temporarily store the loads 101 which are deposited by the one or more transported devices 102 at the load handling station 111 for either storage or retrieval. For example, the shuttle vehicle 103 may pick up a load from a storage portion 110 of the storage rack 105 and deposit the load 101 at the load handling station 111 or the shuttle vehicle 103 may perform a reverse operation of picking up the load 101 from the load handling station 111 and depositing the load 101 at the storage portion 110. In this manner, until the load 101 is picked up by the shuttle vehicle 103, the load 101 may be buffered at the load handling station 111. According to an embodiment, a vertical lift 104 may be positioned adjacent the load handling station 111 to receive the loads 101 from the load handling station 111 or supply the loads 101 to the load handling station 111. For example, the vertical lift 104 may pick up the loads from an infeed conveyor and drop the load 101 at the load handling station 111 or the vertical lift 104 may perform the reverse operation of picking up the load 101 from the load handling station 111 and depositing the load at an outfeed conveyor. In this manner, until the load is picked up by the vertical lift 104 or supplied to the vertical lift 104, the load 101 may be buffered at the load handling station 111. One such vertical lift 104 configured to travel to the load handling stations 111 positioned at multiple storage levels 107 is shown in FIG.1. The vertical lift 104 is mounted to a vertical lift structure 112 installed adjacent the storage racks 105. According to an embodiment, each storage level 107 may include one or more transport devices 102 to pick and deposit the loads 101. In some examples, one shuttle vehicle 103 may be used per storage level 107 per storage rack 105. In some examples, one or more shuttle vehicles 103 may be used per storage level 107 per storage rack 105, one shuttle 103 for storage of the loads 101 and the other shuttle 103 for retrieval of the loads 101 and/or one shuttle 103 for servicing a first set of storage portions and the other shuttle 103 for servicing a second set of storge portions on each storage rack 105 for storage and retrieval of the loads 101. According to an embodiment, multiple storage levels 107 may be serviced by one or more transport devices 102 to pick and deposit the loads 101. For example, the shuttle vehicle 103 may move both in a horizontal direction and a vertical direction within the aisles and/or the voids in dedicated guide rails to reach multiple storage levels 107 for storage and retrieval of the loads 101. As shown in FIG. 1, one shuttle 103 per storage rack 105 is used for storing and retrieving the loads 101 from multiple storage portions 110 distributed along the length of the storage rack 105. One such shuttle vehicle 103 and its components are explained in detail in rest of description. Though a specific structural arrangement of the storage and retrieval system 100 is described in conjunction with FIG. 1, it is evident to one skilled in the art that any alternate structural arrangements of the storage and retrieval system may be employed with the shuttle vehicle 103 described in the succeeding descriptive embodiments.

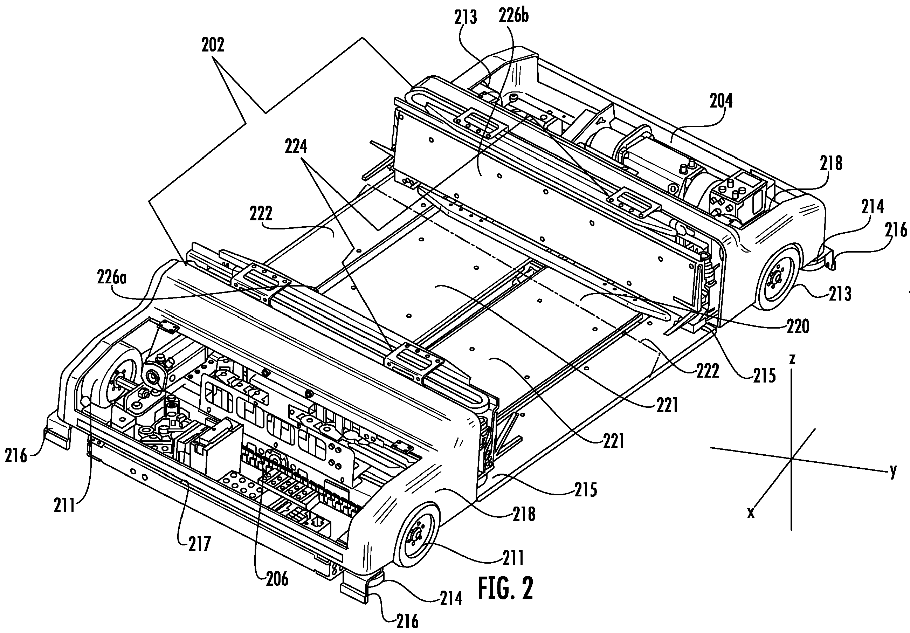

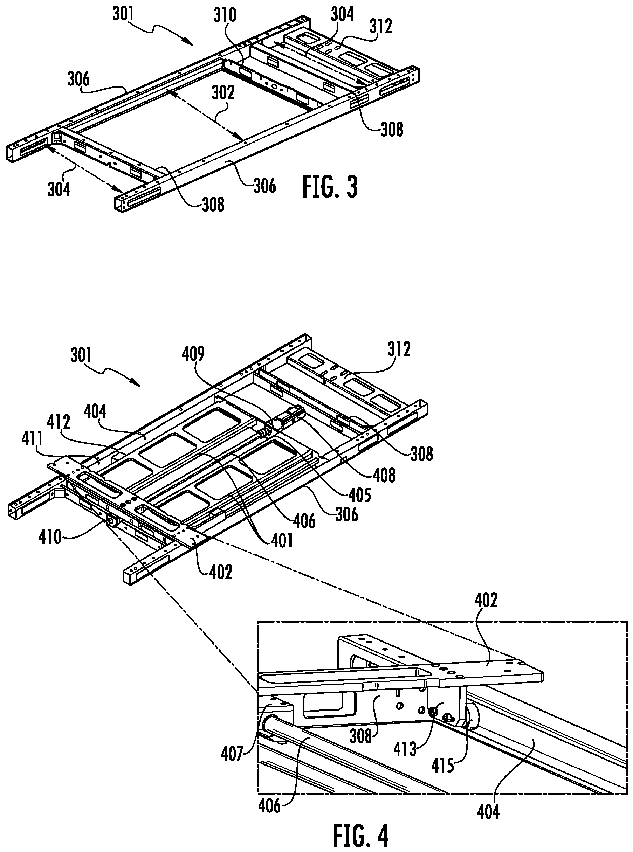

Referring now specifically to the drawings and the illustrative embodiments depicted therein, FIGS. 2 discloses a perspective view of a transport device 103 operating within the storage and retrieval system of FIG.1, in accordance with an embodiment of the present disclosure. The transport device 103, for example, is a shuttle 103 employed for storing and retrieving the loads 101 from the storage and retrieval system of FIG.1. According to an embodiment, the shuttle 103 comprises a load handling module 202, a drive module 204, and an integrated unit 206. The integrated unit 206 comprises a power module 208, a communication module 210 and a control module 212. Each of these modules 202, 204 and unit 206 include one or more components for performing one or more operations and functions defined for each module 202, 204 and unit 206. As shown in FIG. 2, the one or more components of the power module 208, the communication module 210 and the control module 212 are attached in unison to the integrated unit 206. In addition to these modules 202, 204 and unit 206, the shuttle 103 may further include additional components, such as, but not limited to drive wheels 213, guide wheels 214, sensors 215, wipers 216, LEDs 217 and covers 218. These additional components and the component of the modules 202, 204 and the unit 206 work in synergy to operate the shuttle 103 to perform the storage and retrieval of the loads 101. According to an embodiment, the load handling module 202, the drive module 204, and the integrated unit 206 are mounted to a chassis 301 of the shuttle 103 as shown in FIG. 3. Each of the modules 202, 204 and unit 206 may include a corresponding mounting platform or mounting bracket or mounting plate through which the modules 202, 204 and the unit 206 along with the additional components are mounted to the chassis 301. In some examples, the modules 202, 204 or the unit 206 or the additional components are mounted using suitable fasteners. It is understood that a few components of the shuttle vehicle 103 are classified into the modules 202, 204 or the unit 206 based on operational characteristics of the components and the function it performs. Such classifications are for the purpose of ease of explanation and not intended to limit the scope of the disclosure. The functions performed by these modules 202, 204 or unit 206 are described below, which are not explicit disclosure of the functions performed by these modules 202, 204 or unit 206 but merely illustrative embodiments and not restrictive. Such descriptions providing an overview of the functions are not to be considered as limiting the scope of the present disclosure.

Load handling module 202- used for supporting, stabilizing and securing the loads 101; and transferring the loads 101 into and out of the storage racks 105. The one or more components enabling the load handling module 202 to perform such functions are described in detail in conjunction with FIG. 2, FIG. 3, FIG. 4, FIGS. 5A and 5B, FIGS. 6A and 6B, FIG. 7, FIG. 8A and 8B.

Drive module 204 - This module is used for driving the shuttle vehicle 103 in forward and reverse directions, braking a movement of the shuttle vehicle 103, acceleration or deceleration of the shuttle vehicle 103, driving the one or more components of the load handling module 202 to transfer the loads 101 into and out of the storage racks 105. The one or more components performing such functions are described in detail in conjunction with FIG. 4, FIGS. 6A and 6B, FIG. 9.

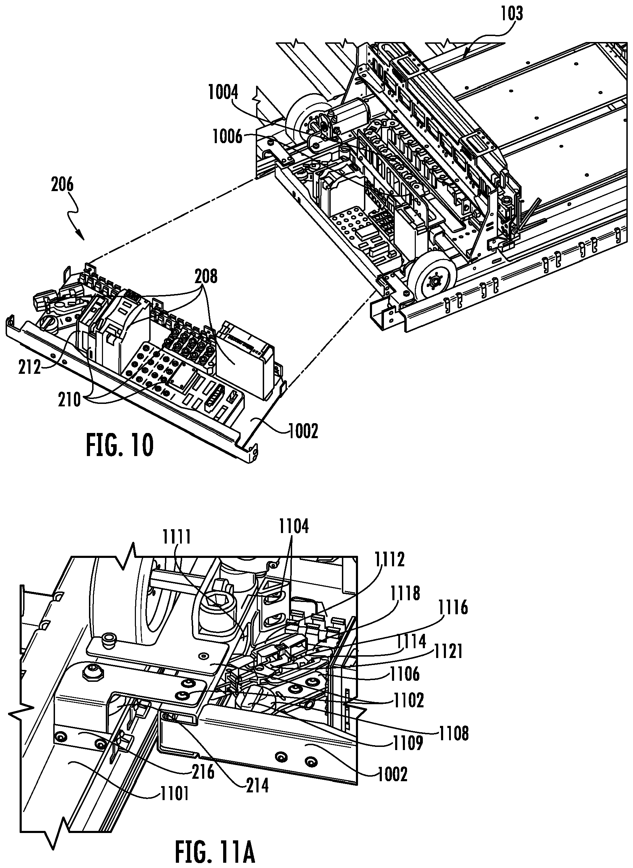

Power module 208 - This module is used for supplying power to the one or more components of the load handling module 202, the drive module 204, the control module 212 and the additional components 213-218 to perform their dedicated functions. The one or more components of the power module 208 are described in detail in conjunction with FIG. 10, FIGS. 11A-11C, and FIGS. 12A and 12B

Communication module 210 - This module is used for wired or wireless communication, through cables or antennas or other communication means, between the one or more components of the load handling module 202, the power module 208, the drive module 204 and the control module 212. In addition, the communication module 210 may also include I/O module interfaces and display interfaces. The one or more components of the communication module 210 are described in detail in conjunction with FIG.10

Control module 212 - This module is used for controlling the one or more components of the drive module 204, the load handling module 202, the power module 208 and the communication module 210. The control module 212 may be considered as a brain of the shuttle vehicle 103 having software logics to control all the components and modules installed in the shuttle vehicle 103. The one or more components of the control module 212 are described in detail in conjunction with FIG.10.

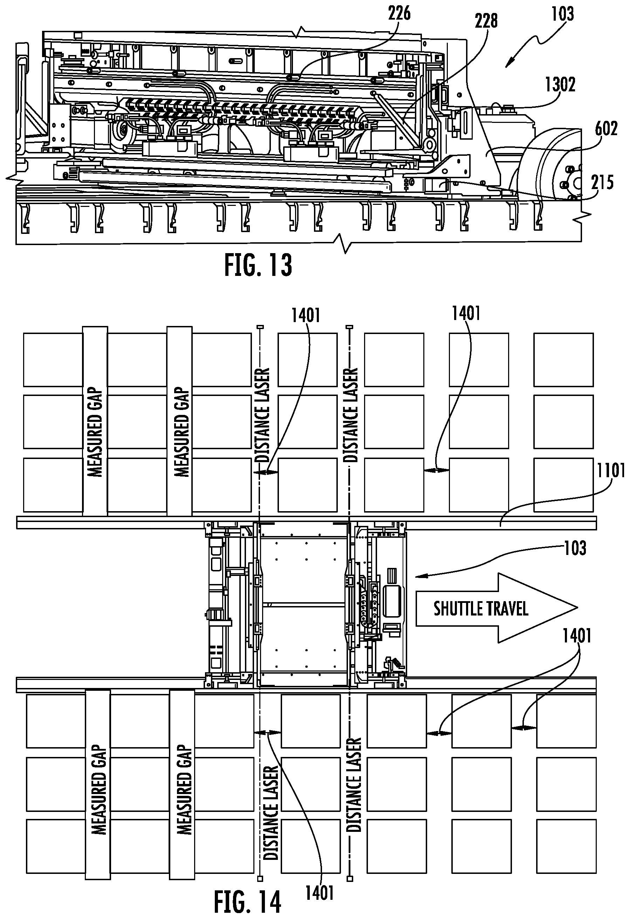

Other additional components 213-218 - The one or more sensors may be used to provide a feedback and trigger an operation of the one or more components of the load handling module 202, the power module 208, the communication module 210 and the control module 212. The one or more sensors used in the shuttle vehicle 103 are described in detail in conjunction with FIGS. 13 to 17. The drive wheels 213 and the guide wheels 214 may form a part of the drive module 204 used for guiding the shuttle vehicle 103 in the guide rails 1101. The wipers 216 are used in front of the drive wheels 213 and the guide wheels 214 to remove any obstacles while the shuttle vehicle 103 is in motion. The covers 218 are used for protecting the one or more components including the cables/wirings of the one or more components of the load handling module 202, the power module 208, the communication module 210 and the control module 212. The other additional components will be described in detail in conjunction with corresponding Figures illustrating the additional components.

Referring back specifically to FIG.2, the loading handling module may be positioned in between the integrated unit 206 and the drive module 204. For example, the loading handling module may be mounted to a central portion 302 of the chassis 301 as shown in FIG. 3 while the integrated unit 206 and the drive module 204 may be mounted on either sides of the load handling module 202 occupying side portions 304 of the chassis 301 as shown in FIG. 3. For example, a pair of spreaders 308 may define the central portion 302 and the side portions 304 of the chassis 301. The pair of spreaders 308 may be coupled to a pair of side tubes 306 using the suitable fasteners. For example, the pair of spreaders 308 and the pair of side tubes 306 may form the chassis 301 defining the central portion 302 and the side portions 304.

According to an embodiment, the load handling module 202 includes a load carrying portion 220 to support the load 101 transferred into and out of the storage racks 105. For example, the load carrying portion 220 may be a conveyor, a slider pan, a series of strip belts and other supporting or conveying structures. In the illustrative embodiment as shown in FIG.1, the load carrying portion 220 is a pair of slider pans 221. The pair of slider pans 221 may be attached to the chassis 301 using a pair of mounting plates 401 as shown in FIG.4. According to an embodiment, a first end of the pair of mounting plates 401 is fixedly attached to a first mounting bracket 310 (shown in FIG. 3) and a second end of the pair of mounting plates 401 is fixedly attached to one of the pair of spreaders 308. In this regard, the load carrying portion 220 may be positioned in between the pair of spreaders 308, specifically between the first mounting bracket 310 and one of the spreaders 308.

According to an embodiment, the pair of slider pans 221 may be slidably attached to the chassis 301 using the pair of mounting plates 401. For example, the pair of mounting plates 401 may include mating grooves 622 (i.e., longitudinally extending grooves 622 or laterally extending grooves 622) and suitable fasteners to enable the sliding movement of the pair of slider pans 221 in both 'X' and 'Y' directional axis. Alternate arrangements for slidably fastening the pair of slider pans 221 on the chassis 301 as known in the art may also be employed. According to an embodiment, the pair of mounting plates 401 and the first mounting bracket 310 may be positioned on the central portion 302 of the chassis 301 in between the pair of spreaders 308 and the pair of side tubes 306 as shown in FIG.4. Referring back specifically to FIG.2, a pair of slider boards 222 may be attached to the pair of slider pans 221 using the suitable fasteners. The pair of slider boards 222 may form a part of the load carrying portion 220. The pair of slider boards 222 may be attached to an end of the pair of slider pans 221 overhanging the pair of side tubes 306 of the chassis 301. For example, the pair of slider boards 222 may be considered as an extension of the pair of slider pans 221. Such an overhanging extension may be provided as an option to bridge or cover any gap between the shuttle vehicle 103 and the storage rack 105 while the shuttle vehicle 103 transfers the load 101 into and out of the storage rack 105.

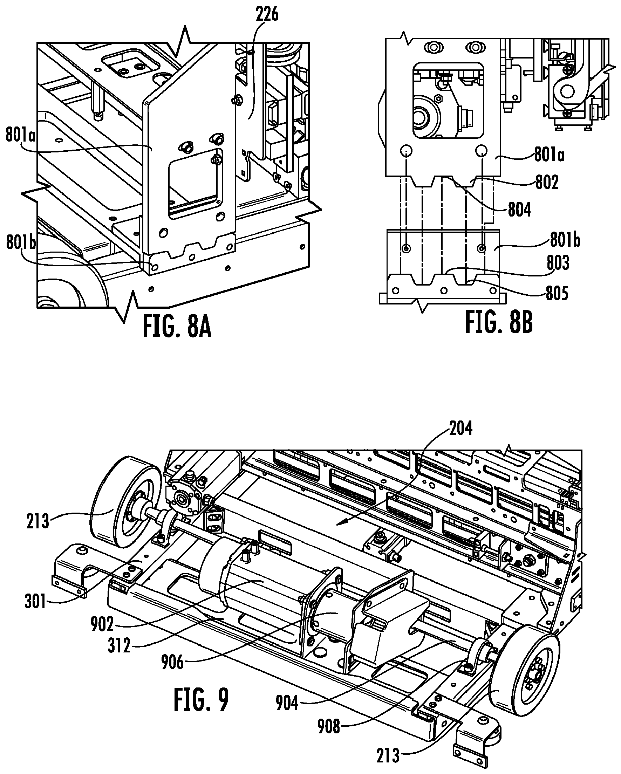

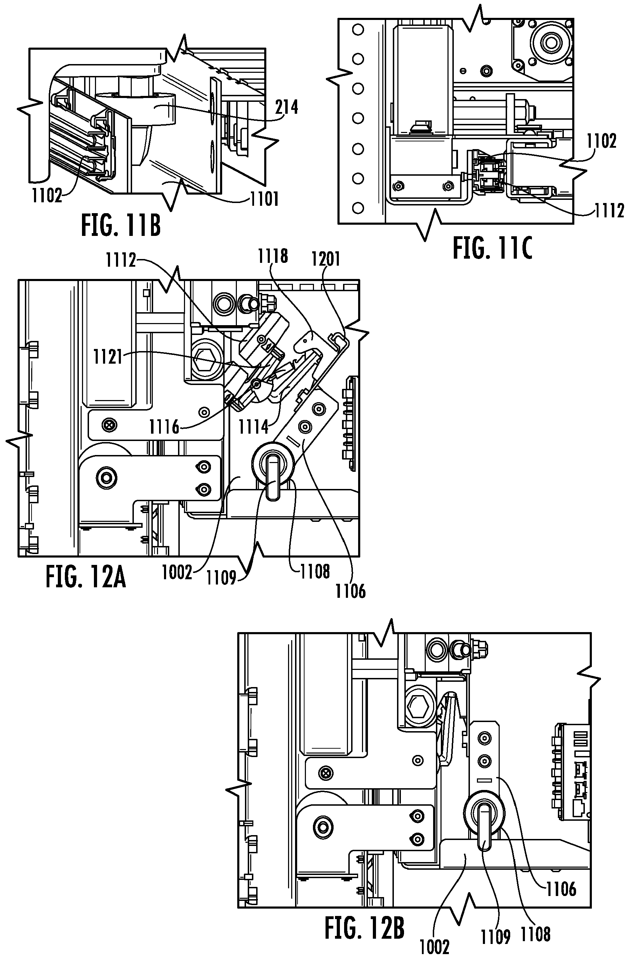

According to an embodiment, the shuttle vehicle 103 includes four wheels 213, 211, each with a corresponding guide wheel 214. As shown in FIG. 2, the shuttle vehicle 103 includes two drive wheels 213 and two idler wheels 211, each with corresponding guide wheel 214. The two drive wheels 213 may be positioned along with the drive module 204 and the two idler wheels 211 may be positioned along with the integrated unit 206. The two drive wheels 213 and the two idler wheels 211 are attached to the chassis 301 using the suitable fasteners. According to an embodiment, an axis of rotation of the drive wheels 213 and the idler wheels 211 may be perpendicular to an axis of rotation of the guide wheels 214. According to an embodiment, the drive wheels 213 facilitates a motion of the shuttle vehicle 103 on corresponding guide rails 1101 (shown in FIGS. 11A-11C) installed in the rack storage system 100 of FG.1. According to an embodiment, the drive wheels 213 are driven by the drive module 204 described in FIG. 9. According to an embodiment, the guide wheels 214 are guided on a portion of the guide rail 1101 and the drive wheels 213 are guided on another portion of the guide rail 1101 as shown clearly in FIG. 11B. The portions of the guide rail 1101 being perpendicular to each other. In some examples, the guide wheels 214 are provided to compensate for any constructional errors in the guide rails 1101 such as parallelism errors or rectilinearly errors which causes vibration or jerk to the shuttle vehicle 103 while travelling on the guide rail 1101. According to an embodiment, the guide wheels 214, the drive wheels 213, and the idler wheels 211 are attached to the chassis 301 using first attachment plates 1102 as shown clearly in FIG. 11A. The first attachment plates 1102, for example, may be bolted flanged plates extending from the chassis 301.

According to an embodiment, the wipers 216 are also attached to the first attachment plates 1102 to which the guides wheels 214 are attached as shown clearly in FIG. 11A. The wipers 216 may be positioned in front of each guide wheel 214 with a clearance between the guide wheel 214 and the wiper. In some examples, the wiper 216 may partially or substantially cover the guide wheel 214 when bolted to the first attachment plates 1102. The wipers 216, for example, may include bristles or any flexible material capable of clearing obstacles such as dirt, dust, granules, fine particles on the guide rails 1101 while the shuttle vehicle 103 moves on the guide rails 1101. According to an embodiment, the components of the drive module 204, the load handling module 202 and the integrated unit 206 are enclosed using a pair of covers 218. A first cover 218a to fully enclose the components of the drive module 204 and partially enclose one or more components of the load handling module 202. A second cover 218b to fully enclose the components of the integrated unit 206 and partially enclose one or more components of the load handling module 202. In some examples, the covers 218 may be of a reinforced plastic material which protects the components from any external disturbances ensuring safety while operating the shuttle 103 minimizing wear and tear of the components.

According to an embodiment, the load handling module 202 includes a load handling device 224. The loading handing device 224 includes a pair of extendable arms 226 configured to extend and retract relative to the load carrying portion 220 towards and away from the storage racks 105. According to an embodiment, each of the extendable arms 226 includes at least a pair of pivotable fingers 228 operated to clamp with the load 101 while extracting the load 101 into the load carrying portion 220. In some examples, the pair of pivotable fingers 228 is operated using solenoids such as, but not limited to linear solenoids, rotary solenoids, or oscillatory solenoids. In some examples, the pair of pivotable fingers 228 is operated using electric motors. According to an embodiment, a first extendable arm 226a of the pair of extendable arms 226 is movable with respect to a second extendable arm 226b. For example, the first extendable arm 226a can be fixedly attached to the chassis 301 and the second extendable arm 226b can be movably attached to the chassis 301. The first extendable arm 226a is movably attached to the chassis 301 using a first mounting platform 402 (shown in FIG.4). In some examples, the second extendable arm 226b is fixedly attached to the chassis 301 in a region between the first mounting bracket 310 and the spreader 308. In some examples, the second extendable arm 226b is fixedly attached to the spreader 308. According to an embodiment, the drive module 204 may be fixedly mounted to the chassis 301 using a second mounting platform 312 (shown in FIG.3 and FIG. 4). The pair of spreaders 308, the first mounting bracket 310, the first mounting platform 402 and the second mounting platform 312 may be arranged in a sequence at predetermined distance from each other. According to an embodiment, the first mounting platform 402 is configured to slide on the chassis 301 towards and away from the second mounting platform 312. In other words, the first extendable arm 226a may slide on the chassis 301 towards and away from the second extendable arm 226b.

Referring now specifically to FIG.3, the modules, the integrated unit 206 and the associated components of the shuttle vehicle 103 are mounted either fixedly or movably on the pair of spreaders 308 or the pair of side tubes 306 which forms the chassis 301. The pair of spreaders 308 and the pair of side tubes 306 may be attached to each other using the suitable fasteners, wherein the pair of spreaders 308 are perpendicular to the pair of side tubes 306. The pair of spreaders 308 and the pair of side tubes 306 may be of a hollow tubular cross section. The hollow tubular cross section may include multiple elongate cut-out portions severed from the hollow tubular cross section. As previously discussed, one such cut-out portion may be used for sliding the first extendable arm 226a on the chassis 301. According to an embodiment, the cut-out portion defines a linear guide track 404 for sliding the first extendable arm 226a. According to an embodiment, the first extendable arm 226a may slide in the linear guide track 404 using a drive mechanism 405 as shown in FIG. 4. For example, the first extendable arm 226a is attached to the chassis 301 using the first mounting platform 402 which can be slidable in the linear guide track 404 on the pair of side tubes 306 using the drive mechanism 405. The drive mechanism 405, for example, is a lead screw assembly 405. The lead screw assembly 405 may include a lead screw shaft 406, a lead screw nut (not shown), thrust bearings (not shown), a coupler (not shown), and a drive motor 408. The lead screw assembly 405 is positioned in between the pair of spreaders 308. The lead screw shaft 406 extends between the first mounting bracket 310 and one of the pair of spreaders 308. A floating end 409 of the lead screw shaft 406 includes the drive motor 408 mounted to the first mounting bracket 310 using the suitable fasteners. The drive motor 408 may be coupled to the lead screw shaft 406 using the coupler and other suitable fasteners. A fixed end 410 of the lead screw shaft 406 is mounted fixedly to one spreader using the suitable fasteners. The floating end 409 and the fixed end 410 include bearings to rotatably support the lead screw shaft 406. Further, the lead screw assembly 405 may include counters to count the number of revolutions of the lead screw shaft 406 when rotated under the influence of the drive motor 408.

In operation, a rotation of the drive motor causes the lead screw shaft 406 to turn, which advances the lead screw nut along a length of the lead screw shaft 406. As shown in FIG. 4, the lead screw shaft 406 is positioned in a region between the pair of mounting plates 401 perpendicular to the first mounting bracket 310 and the pair of spreaders 308. It is to be understood that any suitable screw for converting rotational motion into linear motion may be substituted for the lead screw shaft 406. According to an embodiment, the first mounting platform 402 may be seated on lead screw nut by using a lead screw mount 407 and the suitable fasteners. In operation, rotation of the drive motor causes the lead screw shaft 406 to turn, which advances the lead screw nut along with the first mounting platform 402 along the length of the lead screw shaft 406. In some examples, the first mounting platform 402 may slide towards the first mounting bracket 310 when the drive motor 408 is rotated in a first direction and away from the first mounting bracket 310 when the drive motor 408 is rotated in a second direction opposite the first direction. According to an embodiment, ends of the first mounting platform 402 may be provided with linear guide plates 411 and bushings 412. The first mounting platform 402 slides linearly from one position to another position by using the linear guide plates 411 and bushings 412. The linear sliding motion enabled by the rotational motion of the lead screw. For example, the linear guide plates 411 and the bushings 412 linearly move within the elongated cut-out portions provided or linear guide tracks 404 provided on the pair of side tubes 306 as shown in FIG.4.

As previously discussed, the first extendable arm 226a attached to the first mounting platform 402 linearly slides with the first mounting platform 402 using the linear guide plates 411, the bushings 412 and the lead screw assembly 405. In this regard, a distance between the first extendable arm 226a and the second extendable arm 226b may be adjusted (i.e. increased or reduced) by linearly sliding the first extendable arm 226a towards and away from the second extendable arm 226b using the first mounting platform 402. According to an embodiment, the first extendable arm 226a may linearly slide in a direction transverse to the direction of extension of the first extendable arm 226a. It is understood to a person skilled in the art that such linearly movable construction may also be provided to the second extendable arm 226b in addition or in lieu of the first extendable arm 226a. According to an embodiment, the distance between the first extendable arm 226a and the second extendable arm 226b may be adjusted based on a dimension of the load 101to be handled by the shuttle vehicle 103 and loaded on to the load carrying portion 220. A close-up sectional view of the first mounting platform 402 is shown in FIG.4 in which the one of elongated cut-out portion acting as the linear guide track 404 for the linear guide plates 411 and the bushings 412 are shown. Further, the sectional view clearly shows the first mounting platform 402 mounted to the lead screw shaft 406 via the lead screw mount 407.

As shown in the section view of FIG.4, the first mounting platform 402 includes second attachment plates 413 attached to a bottom of the first mounting platform 402, one on each end of the first mounting platform 402. The second attachment plates 413, for example, may be bolted flanged plates extending from the first mounting platform 402 in a direction opposite the direction of travel of the first mounting platform 402. According to an embodiment, the second attachment plates 413 maybe integrally formed on the first mounting platform 402. According to an embodiment, a pair of support wheels 415 is fastened to the first mounting platform 402. For example, the pair of support wheels 415 may be provided on the bolted flanged plates. The pair of support wheels 415 may be attached to the bolted flanged plates using the suitable fasteners. The c 415 may be non-motorized wheels. The pair of support wheels 415 may be guided within the elongate cut-out portions or the linear guide track 404 on the pair of side tubes 306 within which the linear guide plates 411 and the bushings 412 are guided under the influence of the lead screw assembly 405.

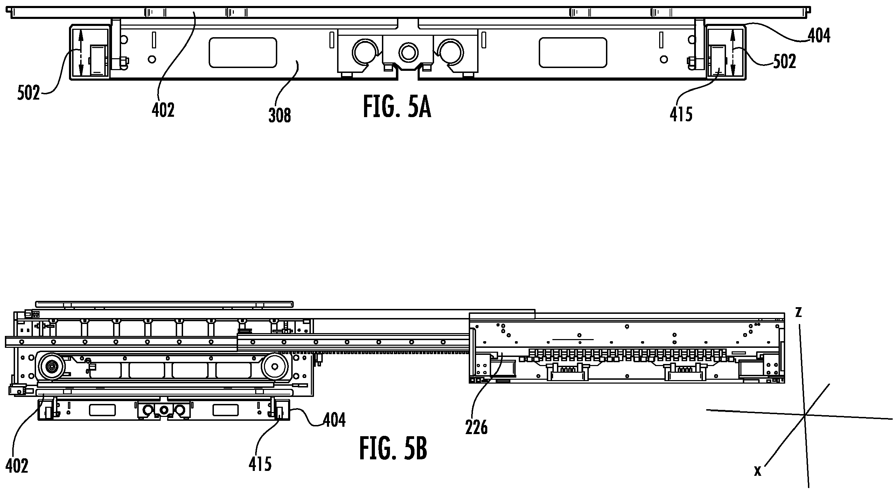

According to an embodiment, the pair of support wheels 415 are positioned on opposing ends of the first mounting platform 402 to support a weight of the loads 101 while the pair of extendable arms 226 extract the loads 101 from the storage rack 105 into the load carrying portion 220. According to an embodiment, the pair of support wheels 415 is guided with a predefined clearance 502 on the linear guide track 404 in a second direction (indicated as axis 'X' in FIG.5B) orthogonal to a first direction (indicated as axis 'Y' in FIG.5B) of extension of the pair of extendable arms 226. For example, the pair of extendable arms 226 may be extended in the first direction to pick or deposit the load 101 into the storage rack 105 and the support wheels 415 are guided on the linear guide track 404 in the second direction which is orthogonal to the first direction of movement of the extendable arms 226.

FIG. 5A illustrates a front view of the chassis 301 with the support wheels of FIG. 4, in accordance with an embodiment of the present disclosure. The first mounting platform 402 with the pair of support wheels 415 is guided on the linear guide tracks 404. It is seen in FIG. 5A that the pair of support wheels 415 is provided with the predefined clearance 502 within the linear guide tracks 404. FIG. 5B illustrates a top view of the chassis 301 with the load handling device 224 and the support rollers 415 of FIG. 4, in accordance with an embodiment of the present disclosure. The pair of extendable arms 226 of the load handling device 224 is shown in an extended position relative to the load carrying portion 220. The pair of extendable arms 226 in the extended position is capable of retrieving the loads 101. According to an embodiment, the pair of support wheels 415 are capable of a negligible vertical movement within the predefined clearance 502 (i.e., between the support wheels 415 and the linear guide track 404) to compensate for the weight of the load 101 retrieved by the pair of extendable arms 226. In this manner, a stress caused by the weight of the load 101 on the pair of extendable arms 226 is relieved since there is an additional support provided by the pair of support wheels 415. In this regard, the first mounting platform 402 is capable of linear movement within the linear guide track 404 to adjust distance between the pair of extendable arms 226 and capable of the negligible vertical movement within the linear guide track 404 to compensate for the stress on the pair of extendable arms 226.

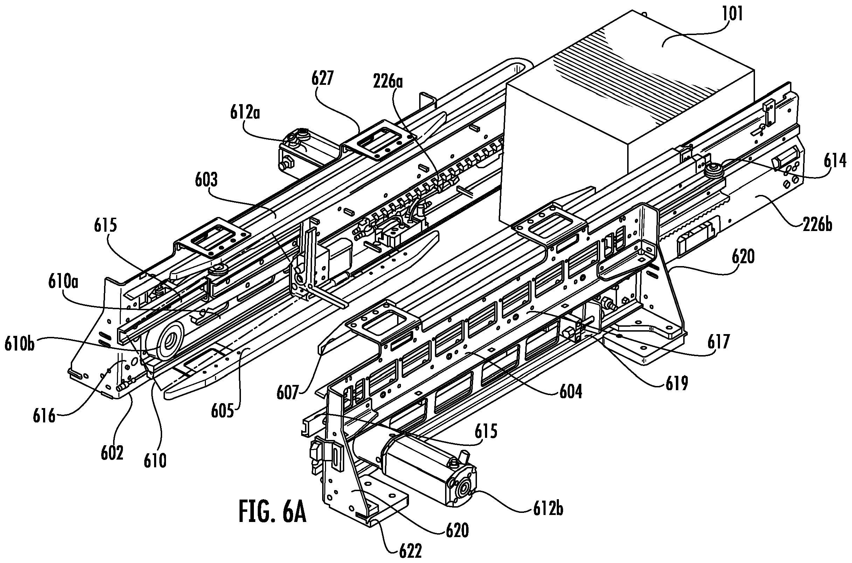

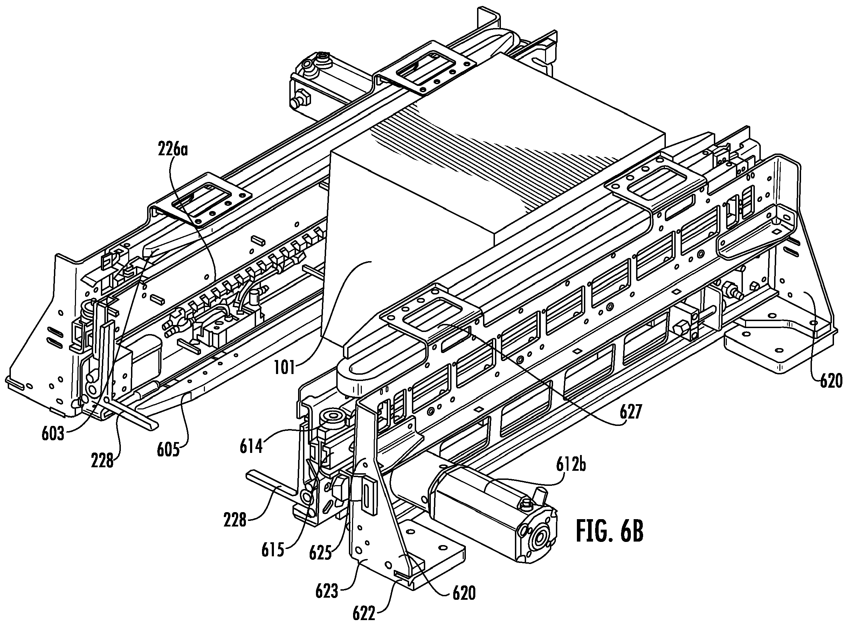

FIG. 6A and 6B discloses a perspective view of the load handling device 224 with the pair of extendable arms 226 in an extended position and a retracted position respectively. According to an embodiment, the load handling device 224 further includes a pair of side frames 602,604, two pairs of guides 603,605,607,609, and a control mechanism 610. The two pairs of guides 603,605,607,609 are attached to the pair of side frames 602,604. A first pair of guides 603,605 comprising a first upper guide 603 and a fist lower guide 605 fastened to a first side frame 602. A second pair of guides 607,609 comprising a second upper guide 607 and a second lower guide 609 fastened to the second side frame 604. The first pair of guides 603,605 and the second pair of guides 607,609 are positioned in parallel and opposing each other. In some examples, a first distance between the first upper guide 603 and the first lower guide 605 is substantially same as a second distance between the second upper guide 607 and a second lower guide 609. In operation, the pair of extendable arms 226 position or align the loads 101 in between the first pair of guides 603,605 and the second pair of guides 607,609 while retrieving the loads 101 from the storage racks 105. The loads 101 retrieved from the storage racks 105 are positioned on the load carrying portion 220 in between the first pair of guides 603,605 and the second pair of guides 607,609. In this manner, the loads 101 are positioned or aligned in between the two pairs of guides 603,605,607,609 such that loads 101 are not subjected to any vibration or jerks or accidental fall when the shuttle 103 travels within the rack storage system 100.

According to an embodiment, the first pair of guides 603,605 and the second pair of guides 607, 609 protrudes out from the first side frame 602 and second side frame 604 offset 611 from the pair of extendable arms 226. In some examples, the offset 611 may be provided such that the pair of extendable arms 226 is out of contact with the load 101 when the load 101 is positioned in between the first pair of guides 603,605 and the second pair of guides 607,609. In some examples, the offset 611 may be created by bolted flanged brackets 627 extending out from the side frames 602,604. In some examples, the offset 611 may create spaces between the load 101 and the pairs of guides 603,605,607,609 to facilitate the pair of extendable arms 226 to retrieve subsequent loads 101 into the load carrying portion 220 without causing any unintended movement to the previously retrieved load 101positioned on the load carrying portion 220. In operation, when the shuttle vehicle 103 initiates a movement to extend the pair of extendable arms 226 to retrieve a load 101 from the storage rack 105, the pair of pivotable fingers 228 provided in each arm may be in a passive position. When the shuttle vehicle 103 initiates a movement to retract the pair of extendable arms 226 with the load 101, the pair of pivotable fingers 228 provided in each arm 226a, 226b may pivot to an active position from the passive position to clamp with load 101 while retrieving it from the storage rack 105. Similarly, when the shuttle vehicle 103 initiates a movement to push the load 101 into the storage rack 105, the pair of pivotable fingers 228 provided in each arm 226a, 226b may be in the active position to clamp with the load 101 during the movement of the arm 226a, 226b towards the storage rack 105. The pair of pivotable fingers 228 pushes the load 101 from the load carrying portion 220 during the storage and pulls the load 101 towards the load carrying portion 220 during the retrieval in the active position.

According to an embodiment, the control mechanism 610 is configured to extend and retract the pair of extendable arms 226 into and out of the storage rack 105. The control mechanism 610 includes a pair of motors 612. A first motor 612a to extend and retract the first extendable arm 226a and a second motor 612b to extend and retract the second extendable arm 226b. The first motor 612a and the second motor 612b are provided to individually control the movement of each extendable arm 226a, 226b. The first motor 612a and the second motor 612b are attached to the first side frame 602 and the second side frame 604 respectively. The control mechanism 610 further includes a timing belt 610a, driven pulley (not shown), and a drive pulley 610b arrangement on each of the extendable arm 226a, 226b as shown in FIG. 6A and 6B. In some examples, the timing belt 610a may include plurality of toothed sections. It is understood to one skilled in the art that the synergetic operation of the timing belt 610a, the drive pulley 610b and the driven pulley along with the motors 612a, 612b initiates the movement of each extendable arm 226a, 226b. According to an embodiment, the pair of extendable arms 226 may include multiple extendable portions provided in a cantilevered manner in the load handling device 224. In other words, the extendable portions are slidably connected to each other to form the pair of extendable arms 226. In operation, the cantilevered extendable portions extend fully or partially to store and retrieve the loads 101. Such cantilevered extendable portions are slidably connected to each other using a sliding mechanism.

As shown in FIG. 6A and 6B, the sliding mechanism may include cables (not shown), cable pulleys 614, and linear slides with roller bearings 615. Each of the extendable portions are connected to each other using the cables and the cable pulleys 614. The linear slides with roller bearings 615 on each of the extendable portion facilitates a sliding movement between extendable portions. For example, an extendable portion comprising the pair of pivotable fingers 228 may be extended using the timing belt 610a, the drive pulley 610b and the driven pulley arrangement and the subsequent extendable portions may be operated by gravity using the cables, cable pulleys 614, and linear slides with roller bearings 615 arrangements. Such arrangements are mounted on an inner surface 616 of the pair of side frames 602,604. It is noted that each cantilevered extendable portion may be removably mounted to the side frames 602,604 for facilitating replacement or repair of the individual extendable portions. In some example, the cantilevered extendable portions and the side frames 602,604 may be of unitary one-piece construction. According to an embodiment, a tensioning fastener 619 may be provided on the pair of side frames 602,604 to adjust a tension of the timing belt 610a and the cable. The tensioning fastener 619, for example, may be a nut and bolt arrangement accessible for an outer surface 617 of the pair of side frames 602,604.

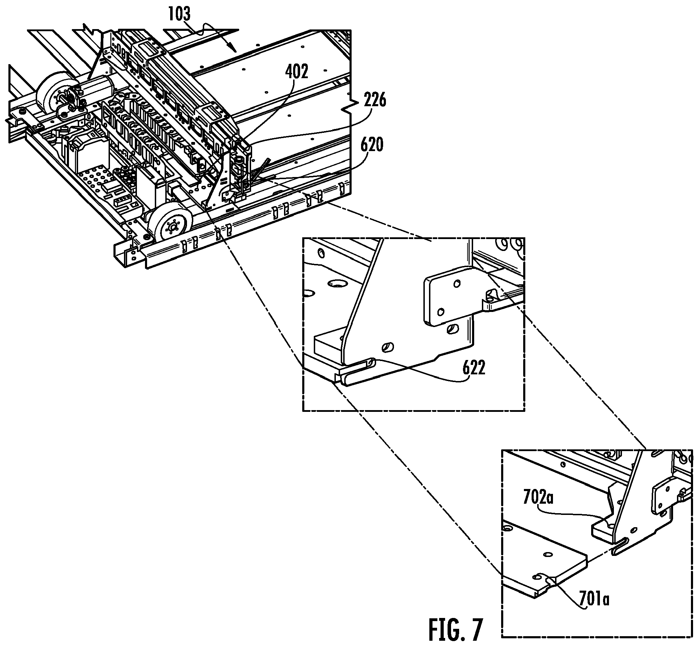

Referring now specifically to the illustrative embodiments of FIG. 7 which illustrates a sectional view of the shuttle vehicle 103 with a close-up view of an attachment mechanism for mounting the load handling module 202 of FIGS. 6A and 6B to a mounting platform, in accordance with an embodiment of the present disclosure. The load handling device 224 is mounted on the first mounting platform 402 using the attachment mechanism comprising a pair of attachment brackets 620. The attachment brackets 620 are fastened on the pair of side frames 602,604 of the load handling device 224 using the suitable fasteners. In alternate embodiments, the side frame and the attachment brackets 620 may be of unitary one-piece construction. According to an embodiment, each side frame 602,604 may include at least one attachment bracket 620 620. In alternate embodiments, two attachment brackets 620 may be provided, each on opposing ends of the side frame 602,604 to attach with the first mounting platform 402. According to an embodiment, each of the attachment bracket 620 620 includes a groove 622. The groove 622 may be an elongated U-shaped groove 622. The groove 622 may be provided on end of the attached bracket mating with the first mounting platform 402. In other words, mating ends of the attachment bracket 620 may include at least one groove 622. The groove 622 may be integrally formed on the attachment bracket 620. For example, the groove 622 may be formed as a cut-out on a bottom potion 623 of the attachment bracket 620. In some examples, the attachment bracket 620 may have a wide bottom portion 623 which gradually tapers towards a top portion 625. For example, the attachment bracket 620 may be of L-shape with the elongated U-shaped groove 622.

According to an embodiment, the groove 622 facilitates an initial coupling of the load handling device 224 with the first mounting platform 402. For example, a portion of the first mounting platform 402 is inserted into the groove 622 by friction fit or force fit or interference fit to temporarily clamp the attachment bracket 620 with the first mounting platform 402. According to an embodiment, the initial coupling of the load handling device 224 with the first mounting platform 402 is to locate and pre-align fastening holes 701 on the attachment bracket 620 and the first mounting platform 402. The attachment bracket 620 and the first mounting platform 402 are then fastened together using the suitable fasteners inserted through the fastening holes 701. For example, after providing the friction fit by means of the groove 622, a first fastening hole 701a on the first mounting platform 402 may substantially overlap a second fastening hole 702a on the attachment bracket 620. In this regard, the load handling device 224 may be fastened at ease with the first mounting platform 402 as the attachment bracket 620 locates and pre-aligns the load handing device 224 with the first mounting platform 402 which would otherwise require manual labor to precisely position and align the fastening holes 701 of the attachment bracket 620 with the fastening holes 701 of the first mounting platform 402. Since the attachment bracket 620 and the first mounting platform 402 are coupled together using friction fit, the requirement of additional fasteners to rigidly couple the attachment bracket 620 and the first mounting platform 402 may be obviated. Therefore, the attachment brackets 620 with grooves 622 facilitate precise attachment of the load handling device 224 with the first mounting platform 402 reducing manual labor and multiple fasteners.

FIG. 8A illustrates a sectional view of an attachment mechanism for mounting the load handling module 202 of FIGS. 6A and 6B to the first mounting platform 402, in accordance with another embodiment of the present disclosure and FIG. 8B illustrates a front view of the attachment mechanism of FIG. 8A, in accordance with another embodiment of the present disclosure. In the illustrative embodiment discloses in the FIGS. 8A and 8B, the load handling device 224 includes a first attachment bracket 801a with toothed portions in the form of first set of ridges 802 and notches 804 and the first mounting platform 402 includes a second attachment 801b bracket 620 with toothed portions in the form of second set of ridges 803 and notches 805. The first set of ridges and notches 802, 804 mate with the second set of ridges and notches 803, 805 such that the fastening holes 701 on the first attachment bracket 801a and the second attachment bracket 801b are located and pre-aligned with minimal effort facilitating ease of fastening of the load handling device 224 with the first mounting platform 402.

Referring now specifically to FIG. 9 which shows the drive module 204 of the shuttle vehicle 103. The drive module 204 includes a drive motor 902, a drive shaft 904, a drive pulley and a driven pulley (not shown), a gear box 906 and a pair of drive wheels 213. According to an embodiment, the pair of drive wheels 213 in connected to the drive shaft 904 and fastened with the pair of side tubes 306 of the chassis 301 using the suitable fasteners, for example, pillow block bearings 908. The drive shaft 904 is driven by the drive motor 902, the drive pulley and driven pulley such that the pair of drive wheels 213 are rotated in forward and reverse directions. The drive motor 902 may be any suitable motors such as, for example, direct current electric motors. The gear box 906 may be provided to adjust a rotational speed of the pair of drive wheels 213 to control an acceleration and deceleration rate of the shuttle vehicle 103. In some examples, the drive module 204 may include a braking unit to instantly stop a movement of the shuttle 103. The drive module 204 receives power from the power module 208 in the integrated unit 206. According to an embodiment, a pair of drive motors may be provided, one on each drive wheel 213 to control the drive wheels 213 independently.

Referring now specifically to FIG. 10 which shows the integrated unit 206 of the shuttle vehicle 103. According to an embodiment, the integrated unit 206 is attached to the chassis 301 using a second mounting bracket 1002. The power module 208, the communication module 210 and the control module 212 are attached to the second mounting bracket 1002 which is then fastened with the chassis 301 using the suitable fasteners. In other words, the modules are integrated and pre-built on the second mounting bracket 1002 and attached to the chassis 301 minimizing installation time. The various components of the modules inside the integrated unit 206 is listed below with its associated function, which are not explicit disclosure of the functions performed by these modules but merely illustrative embodiments and not restrictive. Such descriptions of the functions are not to be considered as limiting the scope of the present disclosure.

Control module 212 includes a central controller. For example, the central controller may be an embedded PC with built-in processors and motherboards. The processors may be a single-core ranging from Intel Atom^{®} via Intel^{®} Core^{™} i7 to Intel^{®} Xeon. Intel Atom^{®} processor, the mid-range controller easily handles all machine logic and data acquisition processes with fast cycle times and processing power. The compact embedded PC easily fits inside the second mounting bracket 1002 along with other components without any issue related to form factor of the PC. Example of such embedded PCs may be an industrial PC from Beckhoff.

Communication module 210 includes a Wi-Fi module, I/O link module and a distribution box. For example, the Wi-Fi module may be industrial-grade wireless 3-in-1 AP/bridge/client with high-performance Wi-Fi connectivity to deliver a secure and reliable wireless network connection. Example of such Wi-Fi module may be a MOXA wireless client. For example, the I/O link module enables connection of up to eight I/O-Link devices, e.g. IO-Link box modules, actuators, sensors or combinations thereof. The I/O link module operates as an 8-channel input module, 24 V DC, which communicates with connected I/O-Link devices as required, parameterizes them and, if necessary, changes their operating mode. Example of such I/O link module may be EP6228 and EP6224 model link modules from Beckhoff. In this regard, the one or more sensors on the shuttle vehicle 103 may be connected to the I/O link module which is then connected to the central controller using EtherCAT communications. Optionally, the communication module 210 may include an EtherCAT box which combines four digital inputs and four digital outputs in one device. These digitals inputs and outputs may be M8 or M12 socket connections.

Power module 208 includes a distributor box, a power converter and an UPS (uninterrupted power supply). The distributor box bundles several cables into one master cable that is connected to the central controller. A status indicator provides you with an overview of a large number of signals. Distributes power and logic to components such as the sensors, motors, and LEDs. Example of such embedded PCs may be a Phoenix distribution box. The power converter may be an efficient DC/DC converter which can do more than just adjust voltages. It can contribute to system reliability and increase endurance in the event of voltage fluctuations providing regulated DC voltages of 12V, 24V or 48V. Example of such power converter is a Puls power converter. The UPS acts as a power back up in the event of a power failure by automatically switching to battery operation and preventing machine downtime. Example of such UPS is from MURR Elektronik.

According to an embodiment, the wires or cables from the integrated unit 206 is routed through the drag chain cable carrier 1004. The drag chain cable carrier 1004 is mounted to the chassis 301 using a third mounting bracket 1006. According to an embodiment, the power module 208 further includes a current collector 1102 and a collector shoe assembly 1104 including a movable arm 1106 and a locking mechanism 1108. Referring now specifically to the illustrative embodiment shown in FIG. 11A-11C, the collector shoe assembly 1104 including the movable arm 1106 and the locking mechanism 1108 is mounted on one end of the second mounting bracket 1002. In some examples, the collector shoe assembly 1104 is positioned in the second mounting bracket 1002 such that the collector shoe assembly 1104 is adjacent to the guide rail 1101through which the shuttle vehicle 103 is guided. A close up view of the current collector 1102 attached to the guide rail 1101is shown in FIGS. 11B and 11C. The current collector 1102 may be mounted to the guide rail 1101 using mounting clips 1110. According to an embodiment, the collector shoe assembly 1104 includes a collector shoe 1112, a collector arm 1114, a collector spring 1116, a collector bracket 1118, and an insulating holder 1120. According to an embodiment, the current collector 1102 supplies power to the components of the shuttle vehicle 103 through the collector shoe assembly 1104. The collector shoe 1112 may be attached to the insulating holder 1120 which in turn is attached to 'U' shaped bracket 1121. The 'U' shaped bracket 1121 is fastened to the collector arm 1114 using a clevis joint combined with other suitable fasteners. The collector spring 1116 is positioned between the 'U' shaped bracket 1121 and the collector arm 1114. According to an embodiment, the collector spring 1116 is compressed and decompressed when the collector shoe assembly 1104 is moved from a conducting position to a non-conducting position and vice-versa. In some examples, the collector spring 1116 provides a continuous pressing contact of the collector shoe 1112 with the current collector 1102. In the conducting position, the collector shoe 1112 may be in contact with the current collector 1102 and in the non-conducting position, the collector shoe 1112 may be out of contact with the current collector 1102. Current supply from the current collector 1102 to the shuttle vehicle 103 is transferred via the collector shoe 1112 through various components of the shuttle vehicle 103. For example, the power converter may distribute the required power to the various components. The current may be an alternating current and in particular in the range between 40 V to 220 V or in the range between 40 V and 110 V. It is also possible to use direct current. The collector shoe 1112, for example, may be graphite impregnated copper contact shoes. According to an embodiment, a pair of collector arms 1114, each having a pair of collector shoes 1112 may be employed in the collector shoe assembly 1104.

According to an embodiment, the collector arm 1114 is attached to the collector bracket 1118 which in turn is attached to the movable arm 1106 through a third attachment plate 1201. The third attachment plate 1201, for example, may be bolted flanged plates extending from the movable arm 1106. According to an embodiment, one end of the movable arm 1106 is coupled to one end of the collector bracket 1118 while other end of the movable arm 1106 is hingedly coupled to the locking mechanism 1108. In this regard, the movable arm 1106 pivots the collector shoe assembly 1104 about a pivot point with respect to the locking mechanism 1108 between the conducting position and the non-conducting position. According to an embodiment, the collector shoe assembly 1104 is moved past recesses 1111 (shown in FIG. 11A) provided on the pair of side tubes 306 when pivoted between the conducting position and the non-conducting position. In this regard, the recesses 1111 are provided in the pair of side tubes 306 such that the components of the collector shoe assembly 1104 may be fully housed or partially housed within the chassis 301. In some examples, when the collector shoe assembly 1104 is pivoted to the conducting position, the components of collector shoe assembly 1104 except the collector shoe 1112 may be housed within the recesses provided on the chassis 301. The collector shoe 1112 may protrude out from the chassis 301 to establish a contact with the current collector 1102 as shown in FIG. 11C.

According to an embodiment, the locking mechanism 1108 may lock the collector shoe assembly 1104 in the conducting position and the non-conducting position. According to an embodiment, the locking mechanism 1108 includes a lever arm 1109 which is capable of being pulled-up and pushed down to lock the collector shoe assembly 1104 in the conducting position and the non-conducting position. For example, the lever arm 1109 may lock and unlock the pivoting movement of the movable arm 1106 about the pivot point. In some examples, the locking mechanism 1108 may include spring loaded latches, cam operated latches, indexing plunger pins, locking skewers, bolt binder clamps and other mechanisms known in the art to lock the pivoting movement of the movable arm 1106. Such locking mechanism 1108 may be coupled to the lever arm 1109 to enable locking and unlocking of the movable arm 1106 when the collector shoe assembly 1104 is in the conducting position or in the non-conducting position. As shown in FIGS. 12A and 12B, the collector shoe assembly 1104 may be pivoted to the conducting and the non-conducting position. For example, when the collector shoe assembly 1104 is in the conducting position, the lever arm 1109 may be pulled up to release a connection between the movable arm 1106 and the locking mechanism 1108. As a result, the movable arm 1106 may be released for pivotal movement with respect to the pivot point as shown in FIG. 12A. In this manner, the collector shoe assembly 1104 may pivot to the non-conducting position from the conducting position. In some examples, the lever arm 1109 may be pushed down to lock the movable arm 1106 in the non-conducting position such that a maintenance activity may be performed on the components without any rebound due to the pivotal movement. Similarly, when the collector shoe assembly 1104 is to be transitioned back to the conducting position, the lever arm 1109 may be pulled up to release a connection between the movable arm 1106 the locking mechanism 1108. As a result, the movable arm 1106 may be released for pivotal movement with respect to the pivot point facilitating the collector shoe assembly 1104 to pivot back to the conducting position as shown in FIG. 12B. Therefore, the collector shoe assembly 1104 may be transitioned to the conducting position and the non-conducting position by the pivotal movement of the movable arm 1106 which is locked and unlocked by operating the lever arm 1109. Such an arrangement may be provided to access the components of the collector shoe assembly 1104 in case of any maintenance or repair. According to an embodiment, the lever arm 1109 may be manually operated. In alternate embodiments, movement of the lever arm 1109 may be triggered automatically such that a connection between the collector shoe 1112 and the current collector 1102 may be disconnected to shut down or brake the shuttle vehicle 103 in case of an emergency.

Referring now specifically to FIGS. 13-16 which discloses one or more sensors used in shuttle vehicle 103. In some examples, the one or more sensors provide feedback or trigger or monitor or control the components of various modules to perform one or more functions. In some examples, the one or more sensors may be also be configured to provide awareness of its environment and external objects. In some examples, the one or more sensors may provide guidance information, load 101 presence information or any other suitable information for use in operation of the shuttle vehicle 103. The one or more sensors, for example, may be one of or a combination of laser sensors, infrared sensors, optical scanning sensors, ultrasonic sensors, proximity sensors, photoeye sensors. These sensors may be provided either as beam line sensors or curtain sensors. These sensors may of thru-beam type, retroreflective type, or diffused type. The one or more sensors, for example, may include cameras. The one or more sensors discussed in conjunction with these FIGS. 13-17 are merely examples of few sensors which could be possibly used in conjunction with the shuttle vehicle 103, therefore, must not be considered to limit the scope of the disclosure. According to an embodiment, the one or more sensors may be positioned on the load carrying portion 220, the chassis 301 and the load handling module 202, specifically, on the load handling device 224. The functions of the sensors positioned on the load handling device 224 is described in conjunction with FIGS. 13-15.

FIG. 13 illustrates a sectional view of the shuttle vehicle 103 of FIG. 2 with sensors provided on the load handling module 202, in accordance with an embodiment of the present disclosure. A first pair of sensors 215 and a second pair of sensors 215 are provided on the load handling device 224. FIG. 13 shows a sectional view in which the first pair of sensors 215 which are placed on opposing ends of the load handling device 224. The first pair of sensors 215 is shown to be attached to one of the pair of side frames 602,604 of the load handling device 224 using bolted flange plates. According to an embodiment, a third pair of sensors 1302 is attached to the load handling device 224. FIG. 13 shows a sectional view in which one of the third pair of sensors 1302 is shown to be attached to one of the pair of side frames 602,604 of the load handling device 224. In some examples, the first pair of sensors 215 may detect a presence of the loads 101 on the storage racks 105. In some examples, the first pair of sensors 215 may measure a gap 1401 existing between rows of loads 101 arranged in the storage racks 105 as shown in FIG.14. The gap measurement may be performed to verify if there are adequate gaps 1401 between the rows of loads 101 to extend and retract the pair of extendable arms 226 of the load handling device 224. In some examples, a width of the gaps 1401 may be substantially equal to a width of the pair of extendable arms 226 or substantially equal to a length of the pair of pivotable fingers 228 in each arm. Such gaps 1401 may be verified such that the pair of extendable arms 226 may extend and retract at ease without accidentally colliding with other rows of loads 101 on the storage rack 105. For example, the extension of the pair of extendable arms 226 may be initiated only after receiving the feedback from the first pair of sensors 215. In some examples, the third pair of sensors 1302 may be provided to measure a distance between the pair of extendable arms 226 when the first extendable arm 226a moves relative to the second extendable arm 226b using the lead screw assembly 405.

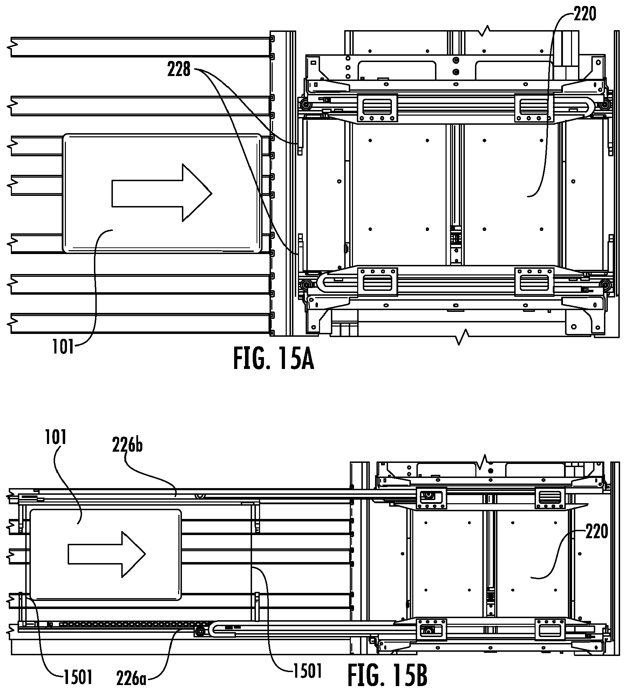

FIG. 15A illustrates a top view of the shuttle vehicle 103 of FIG. 2 storing and retrieving loads 101 using another set of sensors, in accordance with an embodiment of the present disclosure and FIG. 15B illustrates a top view of the shuttle vehicle 103 of FIG. 2 storing and retrieving loads 101 using the sensors of FIG. 15A, in accordance with an embodiment of the present disclosure. A fourth pair of sensors (symbolically depicted by a light beam 1501) is provided on the pair of extendable arms 226 comprising the pair of pivotable fingers 228. The fourth pair of sensors may be attached adjacent the pivotable fingers 228 of the extendable arms 226. In some examples, the fourth pair of sensors may provide information related to a length of the load 101 to be retrieved by the shuttle vehicle 103. In some examples, the fourth pair of sensors may detect a leading edge and a trailing edge of the load 101 to initiate the pivotable movement of the pair of pivotable fingers 228. The fourth pair of sensors, for example, may be photoelectric through beam sensors. As shown in FIGS. 15A-15B, when the pair of extendable arms 226 are extended to pick the load 101, the beam between the fourth pair of sensors is cut-off or blocked by the load 101. The beam continues to be in the blocked state or the cut-off state until the pair of extendable arms 226 travel past the trailing edge of the load 101 and after which the beam is uninterrupted until it detects another load 101. When the beam is uninterrupted after the trailing edge, the pivotable movement of the pair of pivotable fingers 228 is initiated such that the load 101 may be retrieved by the pair of extendable arms 226 and the pair of pivotable fingers 228. In some examples, a time duration in which the fourth pair of sensors was in the cut-off state is measured to determine the length of the load 101.

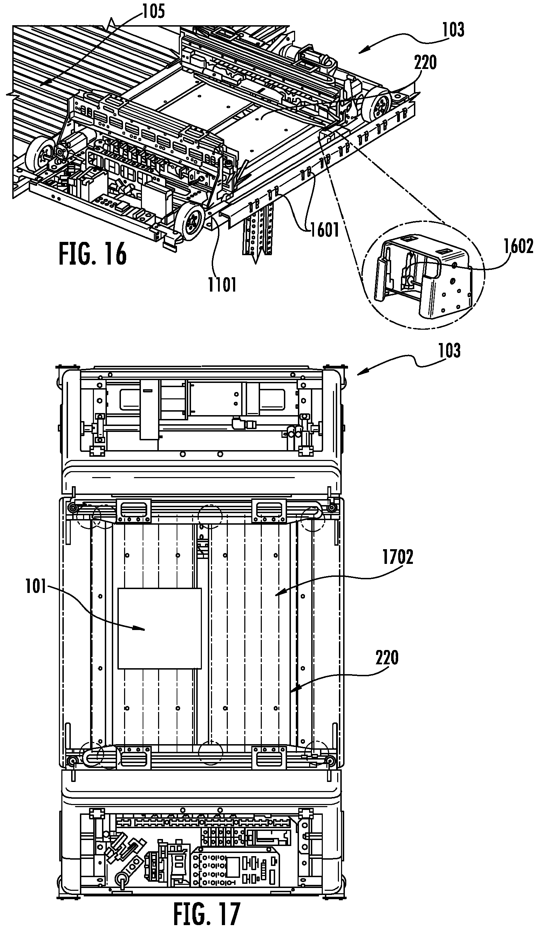

As shown in FIG. 16, a fifth pair of sensors 1602 is provided on the load handling device 224. The fifth pair of sensors 1602 are positioned on the load carrying portion 220 of the shuttle vehicle 103. For example, the fifth pair of sensors 1602 may detect rail slots 1601 on the guide rails 1101 to determine a location of the shuttle 103 in the rack storge system 100 when travelling on the guide rails 1101. For example, the fifth pair of sensors 1602 may be useful in locating the storage portions 110 on each storage racks 105 and positioning the shuttle vehicle 103 in alignment with the storage portions 110. Similarly, FIG. 17 illustrates a top view of the shuttle vehicle 103 of FIG. 2 with an array of sensors (symbolically depicted by light beams 1702) provided on the load carrying portion 220 or the load handling module 202, in accordance with an embodiment of the present disclosure. The array of sensors may be positioned on the load handling device 224 or the load carrying portion 220 for detecting a presence of the load 101on the load carrying portion 220, determining the length of the load 101, and verifying a position and alignment of the load 101. In some examples, the array of sensors may be spaced apart from each other and positioned at a predetermined distance of 50 mm with respect to each to form a light beam curtain to detect the load 101. In some examples, the length of the load 101 may be determined to verify if the retrieved load 101 is same as the load 101 intended to be retrieved by the shuttle vehicle 103. In some examples, the position and alignment is verified by terminal sensors of the array of sensors which may be used to verify if the load 101 is aligned and positioned within the load carrying portion 220 in between the pairs of guides 603, 605, 607, 609 or overhanging from the load carrying portion 220 or at the edge of the load carrying portion 220 to avoid toppling of the loads 101 from the load carrying portion 220.

The distributed control architecture and control logic for controlling the shuttle vehicle 103 are disclosed in FIGS. 6 and 7 of U.S. Pat. No. 10,611,568 incorporated herein for reference.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The foregoing description of an embodiment has been presented for purposes of illustration and description. It is not intended to be exhaustive or to limit the invention to the precise form disclosed. Obvious modifications or variations are possible in light of the above teachings. The embodiment was chosen and described in order to best illustrate the principles of the invention and its practical application to thereby enable one of ordinary skill in the art to best utilize the invention in various embodiments and with various modifications as are suited to the particular use contemplated. Although only a limited number of embodiments of the invention are explained in detail, it is to be understood that the invention is not limited in its scope to the details of construction and arrangement of components set forth in the preceding description or illustrated in the drawings. The invention is capable of other embodiments and of being practiced or carried out in various ways. Also, in describing the embodiment, specific terminology was used for the sake of clarity. It is to be understood that each specific term includes all technical equivalents which operate in a similar manner to accomplish a similar purpose.

## Claims

1. A load handling module coupled to a transport device for storing and retrieving loads into and out of storage racks, the load handling module comprises:
a load carrying portion;
a load handling device comprising a pair of extendable arms configured to extend and retract relative to the load carrying portion towards and away from the storage racks, wherein the load handling device further comprises:
a first pair of guides comprising a first upper guide and a fist lower guide fastened to a first side frame; and
a second pair of guides comprising a second upper guide and a second lower guide fastened to a second side frame, wherein the first pair of guides and the second pair of guides are positioned in parallel and opposing each other; wherein the loads on the load carrying portion are positioned in between the first pair of guides and the second pair of guides by the pair of extendable arms .

2. The load handling module of claim 1, wherein a first distance between the first upper guide and the first lower guide is substantially same as a second distance between the second upper guide and a second lower guide.

3. The load handling module of claim 1, wherein the first pair of guides and the second pair of guides protrudes out from the first side frame and second side frame offset from the pair of extendable arms.

4. The load handling module of claim 1, wherein the pair of extendable arms comprises one or more cantilevered extendable portions.

5. The load handling module of claim 1, wherein each of the extendable arm comprises one or more sensors to control the extension and retraction of the pair of extendable arms.

6. The load handling module of claim 1, wherein each of the extendable arm comprises at least a pair of pivotable fingers to clamp with the load while extracting a load into the load carrying porti on.

7. The load handling module of claim 1, wherein the load carrying portion comprises array of sensors spaced apart from each at a predefined distance to verify if the load in positioned in between the first pair of guides and the second pair of guides.

8. The load handling module of claim 1, wherein each of the extendable arms comprises at least one motor to individually control extension and retraction of each extendable arm.

9. The load handling module of claim 1, wherein one of the pair of extendable arms is linearly slidable in a direction transverse to the direction of extension of the first extendable arm.

10. The load handling module of claim 1, wherein the load handling device is mounted to a chassis comprising a pair of spreaders and pair of side tubes, and wherein each of the side tube comprises elongated cut-out portion defining a linear guide track.

11. A load handling module coupled to a transport device for storing and retrieving loads into and out of storage racks, the load handling module comprises:
a first mounting platform;
a load handling device coupled to the first mounting platform, wherein the loading handing device comprises a pair of extendable arms configured to extend and retract relative to the load carrying portion towards and away from the storage racks; and
a pair of support wheels fastened to the first mounting platform to support a weight of the loads while the extendable arms extract the loads from the storage rack into the load handling platform, wherein each of the support wheel is positioned on the opposing ends of the first mounting platform and guided with a predefined clearance on a linear guide track in a second direction orthogonal to the first direction.

12. The load handling module of claim 11, wherein the support wheels are capable of a negligible vertical movement within the predefined clearance to compensate for the weight of the loads.

13. The load handling module of claim 11, wherein the load handling module further comprises a lead screw assembly to guide the support wheels on the linear guide track

14. The load handling module of claim 11, wherein the load handling module further comprises an attachment bracket attached to a side frame of the load handling device, wherein the attachment bracket further comprises an elongated groove integrally formed on the attachment bracket to initially couple the load handling device with the first mounting platform by a friction fit to locate and pre-align fastening holes on the attachment bracket and the first mounting platform.

15. The load handling module of claim 14, wherein a first fastening hole on the first mounting platform substantially overlaps a second fastening hole on the attachment bracket by the friction fit.
